# EUROPÄISCHE PATENTANMELDUNG

(11) **EP 1 162 023 A2**
(43) Veröffentlichungstag der Anmeldung: **12.12.2001**
(21) Anmeldenummer: 01113183.6
(22) Anmeldetag: 30.05.2001
(51) Int. Cl.: B23K 26/06, G02B 27/09

(54) **Laserbearbeitungsanlage**

(30) Priorität: 09.06.2000 DE 10028635
(71) Anmelder: Carl Baasel Lasertechnik GmbH, D-82319 Starnberg (DE)
(72) Erfinder: Langhans, Lutz, Dr., 82319 Starnberg (DE)
(74) Vertreter: Klunker . Schmitt-Nilson . Hirsch

(57) **Zusammenfassung**

Bei einer Laserbearbeitungsanlage zum Bearbeiten eines Werkstücks ist möglicherweise am Werkstück anstelle eines kreisrunden Fokus ein länglicher Fokus erwünscht. Um dies in einfacher Weise zu erreichen, wird die herkömmliche Fokussieroptik (8) in der Weise abgeändert, daß eine Linse, zum Beispiel die Kollimationslinse (12) der Fokussieroptik, um eine quer zur Strahlrichtung verlaufende Kippachse (A) gekippt wird. Hierdurch wird im Fokusbereich (F) gezielt ein Astigmatismus hervorgerufen, so daß an der Bearbeitungsstelle ein im Strahlquerschnitt länglicher Fokus erhalten wird.

## Beschreibung

Die Erfindung betrifft eine Laserbearbeitungsanlage, mit einer Laserstrahlquelle, die einen Bearbeitungs-Laserstrahl über eine Fokussieroptik auf ein Werkstück gibt, und mit einer Einrichtung zum Erzeugen eines im Strahlquerschnitt länglichen Fokus auf dem Werkstück.

Laserbearbeitungsanlagen werden zum Trennschneiden, zum Bohren von Löchern, zum Schweißen von Nähten und dergleichen eingesetzt, sie können auch als Lasergravuranlage ausgebildet sein, um in die Oberfläche eines Werkstücks eine reliefartige Struktur einzuarbeiten.

Die zum Beispiel durch einen Nd:YAG-Laser gebildete Laserstrahlquelle erzeugt einen Laserstrahl, der häufig über eine Einkoppeloptik in eine Lichtleitfaser eingegeben wird, die den Laserstrahl zu einer Fokussieroptik führt, wo der aus dem Faserende austretende Strahl von der Fokussieroptik auf die Oberfläche des Werkstücks fokussiert wird. Der von der Laserstrahlquelle ausgegebene und bis zu der Fokussieroptik geleitete Laserstrahl hat einen im wesentlichen kreisrunden Querschnitt, und dementsprechend ist auch der Fokus im Bearbeitungsbereich des Werkstücks kreisrund.

Bei bestimmten Bearbeitungsarten, so zum Beispiel beim Schweißen von Nähten oder beim Schneiden, kann es von Vorteil sein, mit einem länglichen Fokus zu arbeiten, beispielsweise mit einem im Strahlquerschnitt elliptischen Fokus. Dabei kann die Hauptachse der Ellipse in Richtung der Relativbewegung zwischen Laserstrahl und Werkstück verlaufen oder quer dazu stehen, je nach Anwendung.

Die klassische Methode, aus einem im Querschnitt kreisrunden Strahlenbündel einen länglichen oder elliptischen Fokus zu bilden, besteht in der Verwendung einer Zylinderlinse in Verbindung mit einer sphärischen Fokussierlinse. Abhängig von den jeweiligen Brennweiten der Fokussierlinse und der Zylinderlinse ergibt sich ein bestimmtes Verhältnis zwischen Hauptachse und Nebenachse der durch den Fokus definierten Ellipse.

Bei dieser Methode wird mit der Zylinderlinse zusätzlich zu der eigentlichen Fokussieroptik ein gesondertes Bauteil benötigt. Abgesehen davon, daß die zusätzliche Zylinderlinse die gesamte bauliche Anordnung vergrößert, stellt die Zylinderlinse auch eine beträchtliche Verteuerung der Anlage dar, da Zylinderlinsen schwierig herzustellen sind. Das herstellerseitige Angebot an Zylinderlinsen ist relativ eng, und damit besteht eine erhebliche Beschränkung bezüglich der Wahl des Achsenverhältnisses des elliptischen Fokus. Für ein gewähltes Achsenverhältnis der Ellipsen-Achsen braucht man jeweils eine bestimmte Zylinderlinse. Für jedes gewünschte Achsenverhältnis muß eine entsprechende Zylinderlinse verfügbar sein.

Ein verstellbares Achsenverhältnis für einen elliptischen Fokus läßt sich dadurch erreichen, daß man zwei gekreuzte Zylinderlinsen in den Strahlengang des Laserstrahls einfügt. Durch Verändern der Lage der Zylinderlinsen läßt sich das Achsenverhältnis der durch den Fokus gebildeten Ellipse einstellen. Der durch zwei zusätzliche Zylinderlinsen im Strahlengang bedingte Aufwand ist hoch und die Justage der Zylinderlinsen ist schwierig. Zudem verkürzt sich die effektive Brennweite der Fokussieroptik.

Der Erfindung liegt die Aufgabe zugrunde, eine Laserbearbeitungsanlage der eingangs genannten Art anzugeben, bei der in einfacher Weise ein länglicher Fokus auf dem Werkstück gebildet werden kann.

Gelöst wird diese Aufgabe bei einer Laserbearbeitungsanlage der eingangs genannten Art dadurch, daß die Einrichtung zum Erzeugen eines länglichen Fokus, insbesondere eines elliptischen Fokus, dadurch gebildet wird, daß die optische Achse mindestens einer Linse der Fokussieroptik gegenüber der Symmetrieachse des in die Linse eintretenden Laserstrahls versetzt und/oder geneigt ist.

Außerdem schafft die Erfindung eine selbständig geschützte Fokussieroptik, die für eine solche Laserbearbeitungsanlage geeignet ist.

Der Grundgedanke der Erfindung liegt darin, durch einen künstlich erzeugten Astigmatismus unter Verzicht auf spezielle Bauteile, die im Stand der Technik zusätzlich zu der Fokussieroptik vorhanden sein müssen, den gewünschten länglichen, insbesondere elliptischen Fokus auf dem Werkstück einzustellen.

Die Einstellung des Astigmatismus erfolgt durch Bildung eines bezüglich der optischen Achse der Fokussieroptik schiefen Laserstrahlbüschels.

Mit mechanisch äußerst geringem Aufwand, dabei aber gleichzeitig äußerst effizient, wird der längliche Fokus in einer Weiterbildung der Erfindung dadurch erreicht, daß die Fokussieroptik eine Kollimationslinse und eine der Kollimationslinse im Strahlengang nachgeordnete Fokussierlinse aufweist, wobei die Kollimationslinse gegenüber der optischen Achse der Fokussierlinse gekippt ist.

Durch dieses Kippen oder Neigen der Kollimationslinse wird ein bezüglich der optischen Achse der Kollimatorlinse schiefes Laserstrahlbüschel gebildet, wodurch ein Astigmatismus hinter der Kollimationslinse entsteht. Im Bereich des Werkstücks erhält man einen im Querschnitt länglichen, insbesondere elliptischen Fokus.

Durch die Erfindung wird nicht nur die Baugröße der gesamten Anlage durch Verzicht auf zusätzliche Elemente (Zylinderlinsen) kompakt gehalten, man kann den länglichen Fokus auch mühelos einstellen und verstellen. Die effektive Brennweite der Fokussieroptik ändert sich durch die Verstellung nicht.

Bei einer Laserbearbeitungsanlage mit einer Lichtleitfaser zwischen der Laserstrahlquelle und der Fokussieroptik dient eine Kollimationslinse dazu, das aus der Faser austretende Strahlenbüschel zu einem Bündel paralleler Lichtstrahlen zu formen. In diesem Fall wird vorzugsweise die Kollimationslinse geneigt oder gekippt. Bei einer Anlage ohne Lichtleitfaser zwischen der Laserstrahlquelle und der Fokussieroptik braucht keine Kollimationslinse eingesetzt zu werden. In diesem Fall läßt sich die Erfindung durch Neigen oder Kippen der Fokussierlinse gegenüber der optischen Achse realisieren.

Im folgenden werden Ausführungsbeispiele der Erfindung anhand der Zeichnung näher erläutert. Es zeigen:
Figur 1 eine schematische Ansicht einer Laserbearbeitungsanlage ohne Lichtleitfaser;
Figur 2 eine vergrößerte Darstellung der Anlage nach Figur 1 im Bereich der Fokussierlinse;
Figur 3 eine schematische Ansicht einer Laserbearbeitungsanlage in Form einer Laserschneidanlage;
Figur 4 eine schematische Ansicht einer Fokussieroptik mit verstellbarer Kollimationslinse;
Figur 5 eine schematisierte Schnittansicht eines Teils einer Fokussieroptik mit einstellbarer Kipplage der Kollimationslinse; und
Figur 6 verschiedene Fokusformen.

Im folgenden soll die Erfindung anhand einer Laserschneidanlage beschrieben werden, wobei sich versteht, daß diese Laserschneidanlage stellvertretend für jegliche Laserbearbeitungsanlage beschrieben wird, welche zum Schweißen, Schneiden und dergleichen eingesetzt wird.

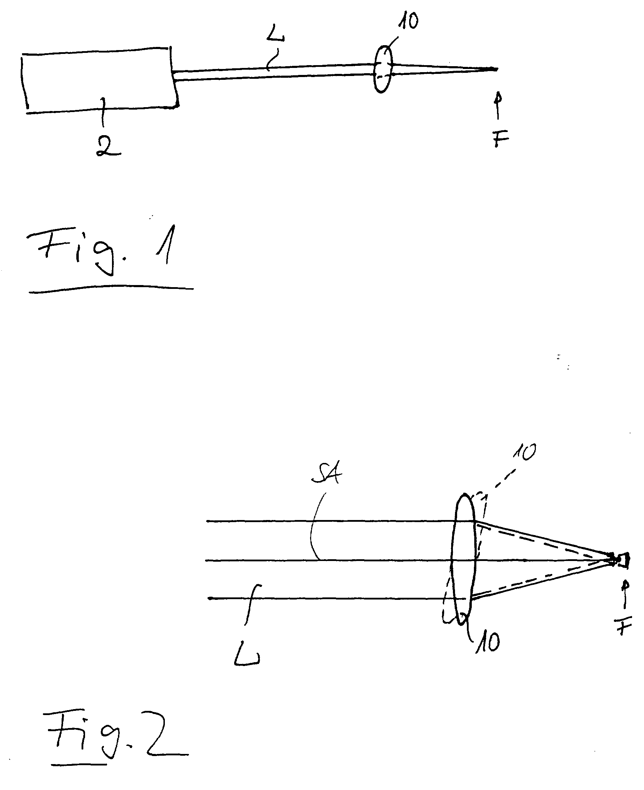

Nach Figur 1 gibt ein Nd:YAG-Laser 2 ein Laserstrahlbündel L ab. Das Laserstrahlbündel L wird von einer Fokussierlinse 10 in einem Fokus F fokussiert.

Figur 2 zeigt den Bereich der Fokussierlinse 10, wobei ein Längsschnitt gestrichelt und ein anderer, demgegenüber orthogonaler Längsschnitt durch ausgezogene Linien dargestellt ist. Durch das Neigen der Fokussierlinse 10 gegenüber der Symmetrieachse SA des eintretenden Lichtstrahlbündels L stellt sich hinter der Fokussierlinse 10 ein Astigmatismus und damit ein im Querschnitt nicht-kreisrunder Querschnitt ein. Bei nicht gekippter Fokussierlinse wäre bei kreisrundem Querschnitt des einfallenden Lichtstrahlbündels L auch der Fokus F im Querschnitt kreisrund.

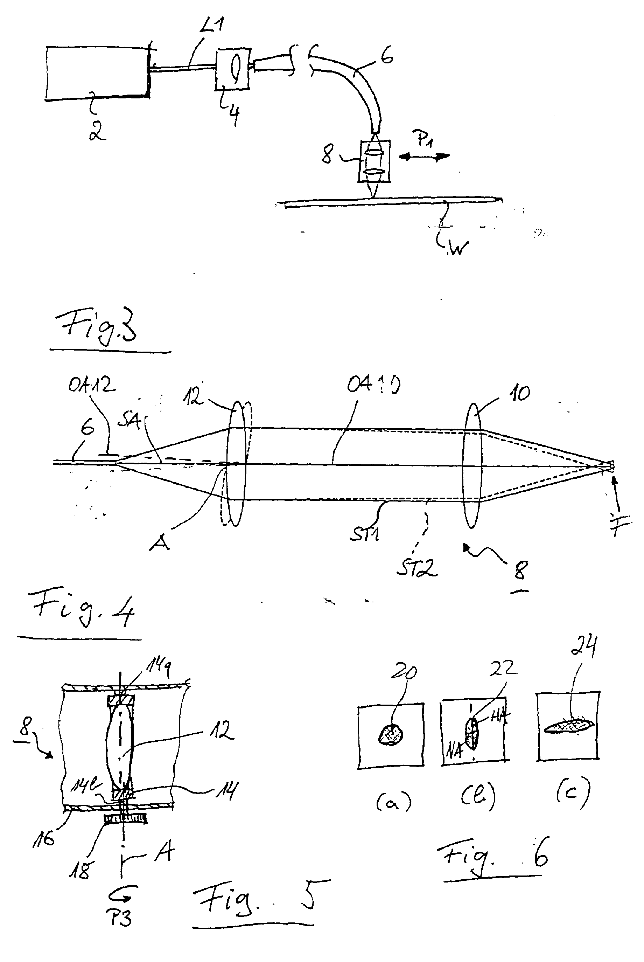

Figur 3 zeigt eine weitere Ausführungsform der Erfindung.

Nach Figur 3 gibt der Nd:YAG-Laser 2 ein Laserstrahlbündel L1 über eine Einkoppeloptik 4 in das Eintrittsende einer Lichtleitfaser 6. Die Lichtleitfaser 6 führt das Laserstrahlbündel zu einer Fokussieroptik 8, welche in Richtung des Doppelpfeils P1 gegenüber einem hier als Metallblech W dargestellten Werkstück verfahrbar ist. Das Blech wird durch den Laserstrahl geschnitten.

Die Fokussieroptik 8 hat die Aufgabe, das als Büschel aus der Lichtleitfaser 6 austretende Laserlicht auf eine Bearbeitungsstelle auf der Oberfläche des Werkstücks W zu fokussieren. Üblicherweise besteht die Fokussieroptik 8 aus einer Kollimationslinse, der eine Fokussierlinse nachgeschaltet ist.

In Figur 4 ist die Fokussieroptik 8 schematisch dargestellt. Das aus der Faser 6 austretende Laserstrahlbüschel besitzt eine Symmetrieachse A, die mit der optischen Achse OA10 einer Fokussierlinse 10 zusammenfällt. Durch ausgezogene Linien ist eine Kollimationslinse 12 dargestellt.

Wenn die Kollimationslinse 12 in sämtlichen Längsschnittebenen durch die optische Achse OA10 des Systems zu dieser Achse OA10 senkrecht verläuft, so, wie es durch die ausgezogenen Linien dargestellt ist, erhält man einen Strahlenverlauf, wie er durch die ausgezogenen Linien ST1 dargestellt ist.

Erfindungsgemäß ist die Kollimationslinse zur Bildung eines im Querschnitt elliptischen Fokus F um eine Kippachse A gekippt. Durch dieses Kippen um die Achse A behält die Kollimationslinse 12 in der die Kippachse A enthaltenden Schnittebene die durch ausgezogene Linien in Figur 4 dargestellte Lage und Form, in einer Schnittebene senkrecht zu der Kippachse A nimmt die Kollimationslinse 12 die durch gestrichelte Linien dargestellte Lage ein.

Wie durch einen gestrichelten Strahlverlauf ST2 angedeutet ist, verengt sich durch das Kippen der Kollimationslinse 12 in der Schnittebene senkrecht zur Kippachse A der Strahlverlauf, so daß sich für den Strahlverlauf ST2 eine Verschiebung des Fokus in Richtung der Fokussierlinse 10 ergibt, während für den Strahlverlauf ST1 die Verhältnisse nahezu unverändert bleiben.

Links in Figur 3 ist zusätzlich zu der Symmetrieachse SA des Laserstrahlbüschels noch die Linsenachse OA12 für die Kollimationslinse 12 dargestellt. Sie gehört zu der gestrichelt dargestellten Schnittebene der gekippten Kollimationslinse.

Figur 5 zeigt schematisch die Lagerung der Kollimationslinse 12 in einem Gehäuse 16 der Fokussieroptik 8. Die Kollimationslinse 12 wird von einer ringförmigen Fassung 14 gehalten, wobei die Fassung 14 ihrerseits über Wellenelemente 14a und 14b am Gehäuse 16 drehbar gelagert ist. Das Drehen der Fassung 14 und damit der Kollimationslinse 12 bezüglich der Kippachse A erfolgt mit Hilfe eines Handrades 18.

Figur 6 zeigt bei (a) einen im Strahlquerschnitt kreisrunden Fokus 20, wie er am Werkstück in Erscheinung tritt, wenn die Kollimationslinse 12 gemäß Figur 4 bezüglich der Symmetrieachse SA in keiner Weise gekippt ist. Bei (b) und (c) sind elliptisch verformte Strahlquerschnitte 22 bzw. 24 dargestellt, die man durch Kippen der Kollimationslinse 12 bezüglich der Systemachse erreichen kann. Wird die Kollimationslinse nur schwach gekippt, so ist das Verhältnis von größerer Hauptachse HA zu kürzerer Nebenachse NA der Ellipse relativ klein, zum Beispiel 1,5; wird die Kollimationslinse stark gekippt, ergibt sich ein größeres Verhältnis von HA/NA.

Die Kollimationslinse 12 kann auch um eine senkrecht zur Kippachse A verlaufende Achse kippbar sein, in diesem Fall ergibt sich ein elliptischer Fokus 24 gemäß Figur 6 (c), bei welchem die Hauptachse um 90° gegenüber der Hauptachse des Fokus 22 nach Figur 6 (b) gedreht ist.

Die in den Figuren 1 und 4 dargestellten Maßnahmen lassen sich nahezu beliebig kombinieren.

Anstelle der Kollimationslinse 12 in Fig. 4 kann auch die Fokussierlinse 10 senkrecht zur Strahlenachse gekippt werden. Auch durch diese Maßnahme wird der Fokus an der gewünschten Stelle in der gewünschten Weise verformt, das heißt, er wird nahezu elliptisch. Der in Fig. 5 dargestellte Lagerungsmechanismus könnte dann für die Fokussierlinse 10 verwendet werden.

## Patentansprüche

1. Laserbearbeitungsanlage, mit einer Laserstrahlquelle (2), die einen Bearbeitungs-Laserstrahl über eine Fokussieroptik (8) auf ein Werkstück (W) gibt, und mit einer Einrichtung zum Erzeugen eines im Strahlquerschnitt länglichen, insbesondere elliptischen Fokus auf dem Werkstück, **dadurch gekennzeichnet, daß** die Einrichtung zum Erzeugen eines länglichen Fokus dadurch gebildet wird, daß die optische Achse mindestens einer Linse (10, 12) der Fokussieroptik gegenüber der Symmetrieachse (SA) des in die Linse (10, 12) eintretenden Laserstrahls gekippt oder kippbar ist.

2. Laserbearbeitungsanlage nach Anspruch 1, mit einer Fokussierlinse (10), die gegenüber der Symmetrieachse gekippt oder kippbar ist.

3. Laserbearbeitungsanlage nach Anspruch 1, mit einer Lichtleitfaser (6) zwischen der Laserstrahlquelle und der Fokussieroptik, **dadurch gekennzeichnet, daß** die Fokussieroptik eine Kollimationslinse (12) und eine der Kollimationslinse im Strahlengang nachgeordnete Fokussierlinse (10) aufweist, und daß die Kollimationslinse (12) gegenüber der optischen Achse (OA10) der Fokussierlinse gekippt oder kippbar ist.

4. Laserbearbeitungsanlage nach einem der Ansprüche 1 bis 3, **dadurch gekennzeichnet, daß** der Linse (10, 12) ein Kipplagen-Verstellmechanismus (14, 18) zugeordnet ist.

5. Fokussieroptik für eine Laserbearbeitungsanlage nach einem der Ansprüche 1 bis 4.
